(19) Europäisches Patentamt
European Patent Office
Office européen des brevets

(11) EP 1 865 522 A2

(12) EUROPEAN PATENT APPLICATION

(43) Date of publication:
**12.12.2007 Bulletin 2007/50**

(51) Int Cl.:
***H01G 9/20*** *(2006.01)*

(21) Application number: **07252317.8**

(22) Date of filing: **08.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.06.2006 JP 2006161327**
**31.05.2007 JP 2007144755**

(71) Applicant: **DAI-ICHI KOGYO SEIYAKU CO., LTD.**
**Kyoto-shi,**
**Kyoto 600-8873 (JP)**

(72) Inventors:
- **Saito, Yasuteru,**
**Dai-Ichi Kogyo Seiyaku Co., Ltd.**
**Kyoto-shi**
**Kyoto 600-8873 (JP)**
- **Kikuta, Manabu,**
**cDai-Ichi Kogyo Seiyaku Co., Ltd.**
**Kyoto-shi**
**Kyoto 600-8873 (JP)**
- **Kono, Michiyuki,**
**Dai-Ichi Kogyo Seiyaku Co., Ltd.**
**Kyoto-shi**
**Kyoto 600-8873 (JP)**

(74) Representative: **Jacob, Reuben Ellis et al**
**R G C Jenkins & Co.,**
**26 Caxton Street**
**London SW1H 0RJ (GB)**

(54) **Redox pair for a dye sensitized solar cell**

(57) Provided is an inexpensive and high-performance photoelectric conversion device of high practicability. The device comprises a semiconductor electrode, a counter electrode and an electrolyte layer held between the two electrodes, in which the electrolyte layer contains a compound of the following general formula (1) as an oxidation-reduction pair therein:

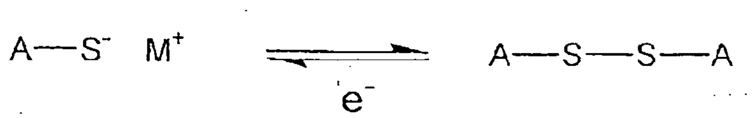
· · · (1)

(wherein $M^+$ represents an organic or inorganic cation; A represents an aromatic, non-aromatic, heteroaromatic or hetero-non-aromatic cyclic compound).

EP 1 865 522 A2

Fig. 1

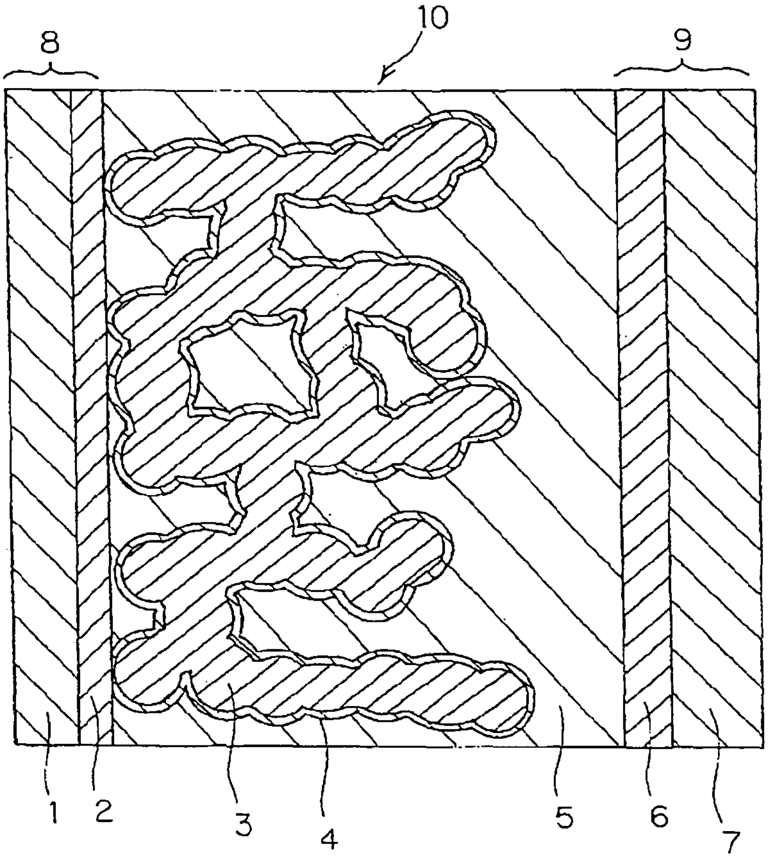

## Description

BACKGROUND OF THE INVENTION

TECHNICAL FIELD

The present invention relates to a photoelectric conversion device favorably used for dye-sensitized solar cells, etc.

BACKGROUND ART

Recently, various solar cells have been proposed for a photoelectric conversion device that converts light energy to electric energy. Among them, dye-sensitized solar cells announced by Graetzel et al. of the Lausanne University in Switzerland in 1991 in "Nature" 1991, 353, pp. 737-740, etc. are expected to be practicable for low-cost solar cells since the materials to be used and the process for them are inexpensive.

A dye-sensitized solar cell generally comprises a semiconductor electrode having a photoelectric conversion layer formed of a dye-adsorbed semiconductor on a conductive substrate, a counter electrode having a catalyst layer formed on a conductive substrate as disposed opposite to the semiconductor electrode, and an electrolyte layer held between these semiconductor electrode and counter electrode.

The electrolyte generally used in the dye-sensitized solar cell comprises an iodine-type oxidation-reduction pair dissolved in an organic solvent. The iodine-type oxidation-reduction pair has excellent properties in that it has a high ionic conductivity and its speed of reducing an oxidized dye is high, and on the other hand, its reactivity on the surface of a working electrode of conductive glass or titanium oxide is low.

However, since iodine is highly sublimable, device sealing is difficult and it is one reason for the device durability reduction under high temperature condition; and in addition, since iodine is highly corrosive to many metals, the metal usable for the device substrate is limited and an expensive substrate such as conductive glass must be used; and iodine has such problems. Further, in case of large-area devices, metallic collector wires are often provided on a substrate for performance improvement, and in such a case, the electrolytic solution must not be in contact with the metallic collector wires for the purpose of preventing the collector wires from being corroded. However, this is problematic in that the fabricating process of the device is complicated and the effective area of the device is reduced.

Further, the iodine-type oxidation-reduction pair has a strong absorption in a visible light region, and when a highly-viscous solvent such as an ionic liquid is used, then the iodine-type oxidation-reduction pair concentration must be increased in order that the solar cell device could fully work, whereby the light absorbability of dye may be retarded, thereby causing device performance reduction; and in addition, when various types of dyes are used for emphasizing the colorfulness of solar cells, then the color of iodine would be a bar to it especially in blue devices, and it could not be said that the iodine-type oxidation-reduction pair is good in designing various devices.

To that effect, the iodine-type oxidation-reduction pair has a high performance as an oxidation-reduction pair but has some drawbacks. Accordingly, an oxidation-reduction pair substitutable for the iodine-type one is desired, and some investigations have been made.

Document 1, J. Phys. Chem. B, 105, 10461-10464 (2001); Document 2, Chem. Eur. J. 9, 3756-3763 (2003) ; Document 3, J. Am. Chem. Soc., 124, 11215-11222 (2002) describe a technique of using a cobalt complex as an oxidation-reduction pair. Though they say that the complex could exhibit a performance on the same level as that of the iodine-type oxidation-reduction pair under feeble light condition, the movement speed of the complex-type oxidation-reduction pair is slow as its molecular size is large, and therefore its performance reduces to about a half under pseudo-sunlight irradiation condition. In addition, as compared with iodine, a cobalt complex is expensive and therefore could not be said to be practicable.

Document 4, J. Phys. Chem. B, 105, 6867-6873 (2001); and Document 5, J. Am. Chem. Soc., 126, 7164-7165 (2004) describe a technique of using $(SCN)_2/SCN^-$ or $(SeCN)_2/SeCN^-$ as an oxidation-reduction pair. $(SCN)_2/SCN^-$ could work as an oxidation-reduction pair, but its performance is at most a half of that of the iodine-type oxidation-reduction pair. As compared with it, $(SeCN)_2/SeCN^-$ may have a higher performance, but its safety is problematic and its practicability could not be said to be good.

In addition to the above, other oxidation-reduction pairs than iodine usable in photoelectric conversion devices are known, such as $Br_2/Br^-$, $Fe(CN)_6^{4-}/Fe(CN)_6^{3-}$, $Fe^{2+}/Fe^{3+}$, $S^{2-}/S_n^{2-}$, $Se^{2-}/Se_n^{2-}$, $V^{2+}/V^{3+}$, quinone/hydroquinone; but these are problematic in their performance, stability and safety, and could not have a performance comparable to that of iodine.

The present invention has been made in consideration of the above points, and its object is to provide a photoelectric conversion device of high practicability, which uses an oxidation-reduction pair having better corrosion resistance and higher transparency than an iodine-type oxidation-reduction pair having sufficient performance and durability.

SUMMARY OF THE INVENTION

We, the present inventors have assiduously studied for the purpose of solving the above-mentioned problems and, as a result, have found that an oxidation-reduction pair represented by a general formula (1) has high performance and stability as an oxidation-reduction pair for photoelectric conversion devices, and that, when a conductive polymer catalyst is used as a counter electrode, then a photoelectric conversion device having a high device photoelectric conversion efficiency can be formed; and on the basis of this finding, we have completed the invention.
Specifically, the photoelectric conversion device of the invention comprises a semiconductor electrode, a counter electrode and an electrolyte layer held between the two electrodes, in which the electrolyte layer contains a compound of the following general formula (1) as an oxidation-reduction pair therein:

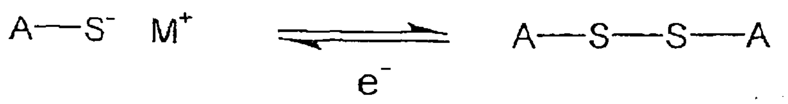

· · · (1)

(wherein $M^+$ represents an organic or inorganic cation; A represents an aromatic, non-aromatic, heteroaromatic or hetero-non-aromatic cyclic compound).
In the photoelectric conversion device of the invention, the cyclic compound is preferably at least one selected from thiadiazole compounds, pyridine compounds and phenylene compounds.
In the photoelectric conversion device of the invention, the counter electrode preferably contains a conductive polymer catalyst that has a catalytic activity for the oxidation-reduction pair.
In the photoelectric conversion device of the invention, the conductive polymer catalyst is preferably composed of a polymer of 3,4-ethylenedioxythiophene or its derivative.

BRIEF DESCRIPTION OF THE DRAWINGS

Fig. 1 is a schematic cross-sectional view showing a basic structure of an embodiment of the photoelectric conversion device.
Fig. 2 is a visible light absorption spectrum.

DETAILED DESCRIPTION OF THE INVENTION

Best modes for carrying out the invention are described in detail hereinunder with reference to the drawings.
Fig. 1 is a schematic cross-sectional view showing one example of a photoelectric conversion device 10.
In Fig. 1, a reference numeral 1 indicates a transparent substrate; a reference numeral 2 indicates a transparent conductive film; a reference numeral 3 indicates a porous metal oxide semiconductor layer; a reference numeral 4 indicates a sensitizing dye; a reference numeral 5 indicates an electrolyte layer; a reference numeral 6 indicates a catalyst layer; a reference numeral 7 indicates an electrode substrate that holds the reference numeral 6; a reference numeral 8 indicates an electrode substrate; and a reference numeral 9 indicates a counter electrode.
As illustrated, the porous metal oxide semiconductor layer 3 is formed on the surface of the electrode substrate 8 that comprises the transparent substrate 1 and the transparent conductive film 2 formed thereon; and the sensitizing dye 4 is adsorbed by the surface of the porous metal oxide semiconductor 3. Via the electrolyte layer 5 of the invention, disposed is the counter electrode 9 that comprises the catalyst layer 6 formed on the surface of the electrode substrate 7, thereby constructing the photoelectric conversion device 10.
Preferred embodiments of the constitutive materials of the photoelectric conversion device 10 of the invention are described below.

[Transparent Substrate]

For the transparent substrate 1 to constitute the electrode substrate 8, usable is one that transmits visible light, and transparent glass is favorable. Also usable is one prepared by working the surface of glass so as to be able to scatter the incident light thereon. Not limited to glass, any plastic plates and plastic films capable of transmitting light are also usable.

The thickness of the transparent substrate 1 is not specifically limited, as varying depending on the shape and the working condition of the photoelectric conversion device 10; but, for example, when glass or plastic is used, its thickness is preferably from 1 mm to 1 cm or so in consideration of the durability in practical use, and when plastic film is used as the device is required to be flexible, then its thickness is preferably from 1 μm to 1 mm or so.

[Transparent Conductive Film]

For the transparent conductive film 2, usable is one that transmits visible light and is conductive. The material of the type includes, for example, metal oxides. Though not specifically defined, preferred are, for example, fluorine-doped tin oxide (hereinafter this is abbreviated as "FTO"), indium oxide, a mixture of tin oxide and indium oxide (hereinafter abbreviated as "ITO"), antimony-doped tin oxide, zinc oxide.

A non-transparent conductive material may also be used so far as it may transmit visible light after treatment for dispersion. The material of the type includes carbon materials and metals. Not specifically defined, the carbon material includes, for example, graphite, carbon black, glassy carbon, carbon nanotubes, fullerene. Also not specifically defined, the metal includes, for example, platinum, gold, silver, ruthenium, copper, aluminium, nickel, cobalt, chromium, iron, molybdenum, titanium, tantalum, and their alloys.

Accordingly, the electrode substrate 8 may be formed by providing a conductive material of at least one or more of the above-mentioned conductive materials, on the surface of the transparent substrate 1. Apart from it, the above-mentioned conductive material may be incorporated into the material that forms the transparent substrate 1, whereby the transparent substrate 1 may be integrated with the transparent conductive film 2 to constitute the electrode substrate 8.

When a metal oxide is used in forming the transparent conductive film 2 on the transparent substrate 1, employable is a liquid-phase method such as a sol-gel method, a vapor-phase method such as sputtering or CVD, or a coating process with a dispersion paste. When a non-transparent conductive material is used, employable is a method of fixing its powder along with a transparent binder.

For integrating the transparent substrate 1 with the transparent conductive film 2, employable is a method of mixing the above-mentioned conductive film material in the transparent substrate 1 during its shaping, as a conductive filler therein.

The thickness of the transparent conductive film 2 is not specifically limited, as varying depending on the conductivity of the material used. For example, the thickness of the film formed of ordinary FTO-coated glass may be from 0.01 μm to 5 μm, preferably from 0.1 μm to 1 μm. The necessary conductivity may vary depending on the area of the electrode to be used, and a broader electrode is required to have a lower resistivity. In general, it may be at most 100 Ω/square, preferably at most 10 Ω/square, more preferably at most 5 Ω/square.

The thickness of the electrode substrate 8 composed of the transparent substrate 1 and the transparent conductive film 2, or the electrode substrate 8 formed by integrating the transparent substrate 1 and the transparent conductive film 2 is not specifically defined, as varying depending on the shape and the working condition of the photoelectric conversion device 10 as so mentioned hereinabove, but may be generally from 1 μm to 1 cm or so.

[Porous Metal Oxide Semiconductor]

Not specifically defined, the porous metal oxide semiconductor 3 includes titanium oxide, zinc oxide, tin oxide, and is preferably titanium oxide, more preferably anatase-type titanium oxide.

For lowering the electric resistance value thereof, the grain boundary of the metal oxide is preferably smaller. For making it adsorb a larger amount of a sensitizing dye, the semiconductor layer preferably has a larger specific surface area, concretely from 10 to 200 $m^2/g$. For increasing the degree of light absorption by the sensitizing dye, it is desirable that the oxide to be used has a broad particle size distribution so as to scatter light, or large oxide semiconductor particles having a particle size of from 300 to 400 nm or so are provided on the porous layer as a reflective layer thereon.

Not specifically defined, the porous metal oxide semiconductor layer 3 may be formed on the transparent conductive film 2 in any known method. For example, employable is a sol-gel method, a coating method with a dispersion paste, or a method of electroprecipitation or electrodeposition.

The thickness of the semiconductor layer 3 is not specifically limited, since its optimum value varies depending on the oxide used, but it may be from 0.1 μm to 50 μm, preferably from 3 to 30 μm.

[Sensitizing Dye]

The sensitizing dye 4 may be any one capable of being excited by sunlight to enable electron injection into the above-mentioned metal oxide semiconductor 3, and it may be any ordinary dye used in general photoelectric conversion devices. For increasing the conversion efficiency of the device, it is desirable that the absorption spectrum of the dye

may overlap with the sunlight spectrum in a broad wavelength region, and the dye has good lightfastness.

Not specifically defined, the sensitizing dye 4 is preferably a ruthenium complex, especially a ruthenium-polypyridine complex; more preferably a ruthenium complex represented by Ru(L)2(X)2. In this, L represents 4,4'-dicarboxy-2,2'-bipyridine or its quaternary ammonium salt, or a carboxyl group-introduced polypyridine-type ligand; and X represents SCN, Cl or CN. For example, it includes bis(4,4'-dicarboxy-2,2'-bipyridine)-diisothiocyanate/ruthenium complex.

Other dyes usable herein are metal complex dyes with any other metal than ruthenium, such as iron complexes, copper complexes. Also usable are organic dyes such as cyan dyes, porphyrin dyes, polyene dyes, coumarin dyes, cyanine dyes, squaric acid dyes, styryl dyes, eosin dyes, indoline dyes, etc.

Preferably, the dye has a group capable of bonding to the metal oxide semiconductor 3, for the purpose of improving its electron injection efficiency into the metal oxide semiconductor 3. Not specifically defined, the bonding group is preferably a carboxyl group, a sulfonic acid group, a hydroxyl group.

Combining a dye capable of absorbing light in a red region or a near-infrared region with the visible light-transmitting electrolyte in the invention may give a blue or transparent photoelectric conversion device, and in such a manner, the application latitude of the device may be enlarged to the field that requires the device colorfulness.

Examples of the solvent to be used for dissolving the above dye include alcohols such as ethanol, nitrogen compound such as acetonitrile, ketones such as acetone, ethers such as diethyl ether, halogenoaliphatic hydrocarbons such as chloroform, aliphatic hydrocarbons such as hexane, aromatic hydrocarbons such as benzene, and esters such as ethyl acetate. The dye concentration in the solution may be suitably controlled depending on the type of the dye and the solvent used. In order that the dye could be fully adsorbed by the surface cf the semiconductor, the dye solution is preferably high in some degree. for example, the concentration is preferably at least 4 x $10^{-5}$ mol/L.

Not specifically defined, the sensitizing dye 4 may be adsorbed by the porous metal oxide semiconductor 3 in any method. For it, for example, employable is a method of dipping the electrode substrate 8 with the porous metal oxide semiconductor 3 formed thereon, in a solution of the dye at a room temperature under an atmospheric pressure. It is desirable that the dipping time is suitably controlled in order that a monomolecular film of the sensitizing dye 4 could be uniformly formed on the semiconductor layer 3, depending on the semiconductor used, the dye, the type of the solvent and the concentration of the dye. For effective adsorption, the dipping is attained preferably under heat.

[Electrolyte Layer]

In the invention, the electrolyte layer 5 contains a compound represented by the following general formula (1), as the oxidation-reduction pair therein.

$$A{-}S^{-}\ M^{+} \underset{e^{-}}{\rightleftharpoons} A{-}S{-}S{-}A \quad \cdots \ (1)$$

(wherein M' represents an organic or inorganic cation; A represents an aromatic, non-aromatic, heteroaromatic or hetero-non-aromatic cyclic compound).

Examples of A are compounds having any of a $C_6$-$C_{12}$ aryl group, a $C_1$-$C_{12}$ heteroaryl group, a $C_1$-$C_{12}$ heterocyclic group, or a $C_6$-$C_{30}$ alkylaryl group.

The aryl group indicates an aromatic monocyclic or polycyclic compound, preferably including a phenyl group and a naphthyl group.

The heteroaryl group indicates an aromatic monocyclic or polycyclic compound having at least one hetero atom of N, O, S, etc. For example, its preferred examples are furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, thiadiazolyl, benzofuranyl, benzothiophenyl, carbazolyl, benzoxazolyl, pyrimidinyl, benzimidazolyl, quinoxalinyl; benzothiazolyl, naphthyridinyl, isoxazolyl, isothiazolyl, purinyl, quinazolinyl.

The heterocyclic group indicates a non-aromatic cyclic compound having at least one hetero atom of N, O, S, etc. For example, its preferred examples are saturated derivatives or partially-unsaturated derivatives of the above-mentioned heteroaryl group. Concretely, they include pyrrolidinyl, tetrahydrofuranyl, morpholinyl, thiomorpholinyl, piperidinyl, piperazinyl, thiazolidinyl, isothiazolidinyl, imidazolidinyl.

These compounds may have from 0 to 3 substituents. The substituent includes H, OH, F, Cl, Br, I, $CF_3$, CN, $NO_2$, $SO_3H$, a $C_1$-$C_{30}$ linear, branched or partially-halogenated alkyl group, a $C_3$-$C_{12}$ cycloalkyl group, a $C_1$-$C_{12}$ heterocyclic group, a $C_2$-$C_8$ alkenyl group, a $C_6$-$C_{12}$ aryl group, a $C_6$-$C_{30}$ alkylaryl group, a $C_1$-$C_{12}$ heteroaryl group, a $C_6$-$C_{30}$ alkylheteroaryl group, a $C_6$-$C_{30}$. alkylheterocyclic group, a $C_1$-$C_{48}$ alkyl group, a $C_1$-$C_6$ alkoxy group, a $C_1$-$C_6$ hydroxyalkyl group, $Ph_2P(O)$-, $Ph_2P$-, $Me_2P(O)$-, $Me_2P$-, $Ph_2P(S)$-, $Me_2P(S)$-, $Ph_2P{=}N$-, $Me_3P{=}N$-, $C_6H_5C_nH_{2n}$-, $C_nH_{2n+1}C_6H_4$- ,

$C_{10}H_{2m+1}$ $C_6H_4C_nH_{2n}$-, $CH_2$=$CHC_nH_{2n}$-, $CH_2$=$CHC_6H_5$-, $CH_2CHC_6H_4C_nH_{2n+1}$-, $CH_2$=$CHC_nH_{2n}C_6H_4$-, $CF_3$, $C_nF_{2n+1}$-, $HC_nF_{2n+1}$-, $CF_3O$-, $C_nF_{2r.+1}O$-, $HC_nF_{2n+1}O$-, $CF_3S$-, $HCF_3S$-, $HC_nF_{2n-1}S$-, $ClC_nF_{2n+1}$-, $ClC_nF_{2n+1}O$-, $ClC_nF_{2n+1}S$-, $BrC_nF_{2n+1}$-, $BrC_nF_{2n+1}O$-, $BrC_nF_{2n+1}S$-, $IC_nF_{2n+1}$-, $IC_nF_{2n+1}O$-, $IC_nF_{2n+1}S$-, $CH_2$=$CHC_nF_{2n+1}$-, $CH_2$=$CHC_nF_{2n+1}O$-, $CH_2$=$CHC_nF_{2n+1}S$-, $CH_3OC_nF_{2n+1}$-, $CH_3OC_nF_{2n+1}O$-, $CH_3OC_nF_{2n-1}S$-, $C_2H_5OC_nH_{2n+1}$-, $C_2H_5OC_nF_{2+1}O$-, $C_2H_5OC_nF_{2n+1}S$-, $CF_3CH_2$-, $CF_3CH_2O$-, $(CF_3)_2CH$-, $(CF_3)_2CHO$-, $CHF_2$-, $CHF_2O$-, $CHF_2S$-, $CClF_2$-, $CClF_2O$-, $CClF_2S$-, $CCl_2FO$-, $CCl_2FS$-, $CCl_3$-, $CCl_3O$-, $C_6Cl_5$-, $C_6Cl_5O$-, $FSO_2CF_2$-, $ClSO_2(CF_2)_n$-, $^-SO_3(CF_2)_r$-, $CO_2$ $(CF_2)_n$-, $FSO_2N^{(-)}$ $sO_2$ $(CF_2)_n$-, $CF_3SO_2N^{(-)}SO_2$ $(CF_2)_n$-, $C_nF_{2n+1}SO_2N^{(-)}$ $SO_2$ $(CF_2)_n$-, $FSO_2$ $(CF_2)_n$-, $ClSO_2$ $(CF_2)$ $_n$-, $C_nF_{2n+1}SO_2N^{(-)}(CF_2)_n$-, (Ph represents a phenyl group; Me represents a methyl group; m and n each indicate an integer of from 1 to 48. The same shall apply hereinunder.)

These compounds may contain a hetero group such as - O-, =N-, -S-, =P-, =(P=O)-, -SO-, -$SO_2$-.

Further, of the above, A is especially preferably any of thiadiazole compounds, pyridine compounds and phenylene compounds.

These compounds may have from 1 to 3 substituents. For example, the substituent includes OH, F, C1, Br, I, $CF_3$, CN, $NO_2$, $SO_3H$, $SO_3$-, a $C_1$-$C_6$ alkoxy group, a $C_1$-$C_6$ hydroxyalkyl group, a $C_1$-$C_{12}$ linear or branched alkyl group, a $C_6$-$C_{12}$ aryl group, $C_nF_{2a+1}$-, $Ph_2P(O)$-, $Ph_2P$-, $Me_2P(O)$-, $Me_2P$-, $Ph_2P(S)$-, $Me_2P(S)$-, $Ph_3P$=N-, $Me_3P$=N-, $C_6H_5C_nH_{2n}$-, $C_nH_{2n+1}C_6H_4$-, $C_mH_{2n+1}C_6H_4C_nH_{2n}$-, $CH_2$=$CHC_nH_2$-, $CH_2$=$CHC_6H_5$-, $CH_2$=$CHC_6H_4C_nH_{2n+1}$-, $CH_2$=$CHC_nH_{2n}C_6H_4$-. Above all, especially preferred are the compounds having a substituent of any of the following general formulae:

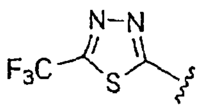
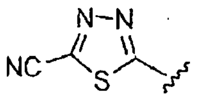
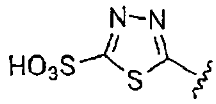
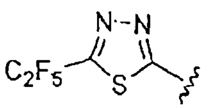
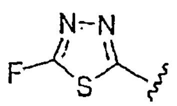
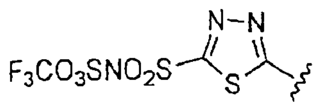
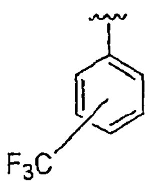
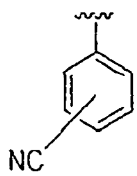
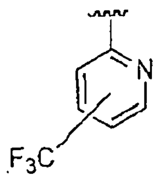
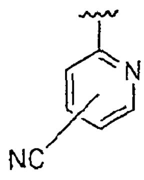
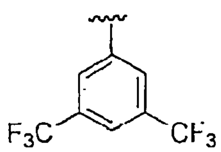
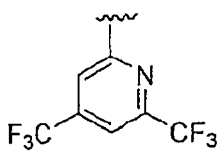
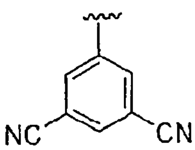
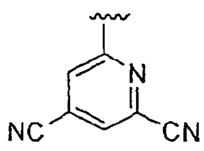

Examples of M in formula (1) are positively-charged, $C_1$-$C_{12}$ heteroaryl group and $C_1$-$C_{12}$ heterocyclic group.

These compounds may have from 1 to 3 substituents. For example, the substituent includes OH, F, Cl, Br, I, $CF_3$, CN, $NO_2$, $SO_3H$, $SO_3$-, a $C_1$-$C_6$ alkoxy group, a $C_1$-$C_6$ hydroxyalkyl group, a $C_1$-$C_{12}$ linear or branched alkyl group, a $C_6$-$C_{12}$ aryl group, $C_nF_{2n+1}$-, $Ph_2P(O)$-, $Ph_2P$-, $Me_2P(O)$-, $Me_2P$-, $Ph_2P(S)$-, $Me_2P(S)$-, $Ph_3P$=N-, $Me_3P$=N-, $C_6H_5C_nH_{2n}$-, $C_nH_{2n+1}C_6H_4$-, $C_mH_{2m+1}C_6H_4C_nH_{2n}$-, $CH_2$=$CHC_nH_{2n}$-, $CH_2$=$CHC_6H_5$-, $CH_2$=$CHC_6H_4C_nH_{2n+1}$-, $CH_2$=$CHC_nH_{2n}C_6H_4$-.

Further, other examples of M in formula (1) are inorganic cations such as $H^+$, $Li^+$, $K^+$, $Na^+$; and organic cations of any of the following formulae:

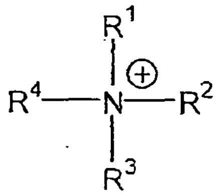
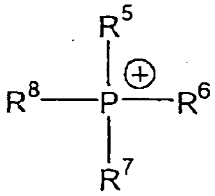
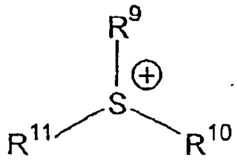
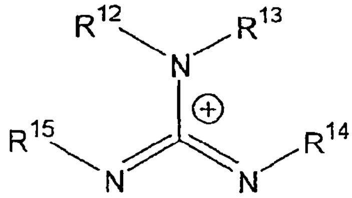

$R^1$ to $R^{15}$ each represent a $C_1$-$C_{20}$ linear or branched alkyl group, a $C_3$-$C_{12}$ cycloalkyl group, a $C_1$-$C_{12}$ heterocyclic group, a $C_2$-$C_{20}$ alkenyl group, a $C_2$-$C_{20}$ alkynyl group, a $C_6$-$C_{12}$ aryl group, a $C_6$-$C_{20}$ alkylaryl group, a $C_1$-$C_{12}$ heteroaryl group; and $R^1$ to $R^4$, $R^5$ to $R^8$, $R^9$ to $R^{11}$, and $R^{12}$ to $R^{15}$ each may be the same or different.

$R^1$ to $R^{15}$ may have from 1 to 3 substituents each. For example, the substituent includes OH, F, Cl, Br, I, $CF_3$, CN, $NO_2$, $SO_3H$, $SO_3$-, a $C_1$-$C_6$ alkoxy group, a $C_1$-$C_6$ hydroxyalkyl group, a $C_1$-$C_{12}$ linear or branched alkyl group, a $C_6$-$C_{12}$ aryl group, $C_nF_{2n-1}$-, $C_6H_5C_nH_{2n}$-, $C_nH_{2n+1}C_6H_4$-, $C_mH_{2m+1}C_6H_4C_nH_{2n}$-, $CH_2$=$CHC_nH_{2n}$-, $CH_2$=$CHC_6H_5$-, $CH_2$=$CHC_6H_4C_nH_{2n+1}$-, $CH_2$=$CHC_nH_{2n}C_6H_4$-.

Further, of the above, $M^+$ is especially preferably an imidazolium compound cation having a quaternated nitrogen atom with a $C_1$-$C_{12}$ linear or branched alkyl group at the N-position; or a tetraalkylammonium compound cation in which the alkyl group is independently a $C_1$-$C_{12}$ linear or branched alkyl group.

Not specifically defined, the solvent to solve the above-mentioned oxidation-reduction pair may be any compound capable of dissolving the oxidation-reduction pair, and it may be suitably selected from non-aqueous organic solvents, low temperature-molten salts, water and protic organic solvents. For the organic solvent, example, preferably used are nitrile compounds such as acetonitrile, methoxyacetonitrile, valeronitrile, 3-methoxypropionitrile; lactone compounds such as γ-butyrolactone, valerolactone; carbonate compounds such as ethylene carbonate, propylene carbonate; ethers such as dioxane, diethyl ether, ethylene glycol dialkyl ether; alcohols such as methanol, ethanol; dimethylformamide; imidazoles. Above all, more preferred are acetonitrile, valeronitrile, 3-methoxypropionitrile, propylene carbonate.

The above solvent may also be an ionic liquid, or that is a molten salt. Not specifically defined, the ionic liquid may be any one generally used in known cells or photoelectric conversion devices, such as those described in Inorg. Chem., 1996, 35, pp. 1168-1178; Electrochemistry, 2002, 2, pp. 130-136; JP-T 9-507334; JP-A 8-259543. For it, for example, preferred are salts having a melting point lower than room temperature (25°C); and other salts having a melting point higher than room temperature but capable of being liquefied at room temperature when mixed with any other molten salt or any other additive than molten salt. These may be used either singly or as combined.

Concretely, the molten salt cation is preferably ammonium, imidazolium, oxazolium, thiazolium, oxadiazolium, triazolium, pyrrolidinium, pyridinium, piperidinium, pyrazolium, pyrimidinium, pyrazinium, triazinium, phosphonium, sulfonium, carbazolium, indolium and their derivatives; more preferably ammonium, imidazolium, pyridinium, piperidinium, pyrazolium, sulfonium.

The molten salt anion includes metal chlorides such as $AlCl_4^-$, $Al_2Cl_7^-$ ; fluorine-containing compounds such as $PF_6^-$, $BF_4^-$, $CF_3SO3^-$, $N(FSO_2)_2^-$, $N(CF_3SO_2)_2^-$, $N(C_2F_5SO_2)_2^-$, $F(HF)n^-$, $CF_3COO^-$; non-fluorine compounds such as $NO_3^-$, $CH_3COO^-$, $C_6H_{11}COO^-$, $CH_3OCO_3^-$, $CH_3OS_2^-$, $CH_3SO_3^-$, $CH_3SO_2^-$, $(CH_3O)_2PO_2^-$, $SCN^-$; and halides such as iodide, bromide.

When the oxidation-reduction pair is liquid by itself at room temperature, it may be used as such, not mixed in a solvent.

Not specifically limited, the blend ratio of the oxidized form to the reduced form of the above-mentioned oxidation-reduction pair may be preferably from 0.001 to 10, more preferably from 0.01 to 1, as a molar ration of oxidized form/reduced form. The concentration of the oxidation-reduction pair in the electrolyte layer may be generally from 0.05 to 10 mol/L, preferably from 0.1 to 5 mol/L.

The electrolyte layer 5 may optionally contain a lithium salt, an imidazolium salt or a quaternary ammonium salt as a supporting electrolyte; and a base such as t-butylpyridine or n-methylbenzimidazole and a thiocyanate such as guanidinium thiocyanate as additives, added thereto. The additive may be added to the electrolyte layer in such a degree that it does not detract from the properties of the layer. A suitable gelling agent may also be added to the layer for physically/chemically gelling it.

[Counter Electrode]

The counter electrode 9 has a structure that comprises the catalyst layer 6 formed on the surface of the electrode substrate 7. The electrode substrate 7 serves both as a support for the catalyst layer 6 and as a collector, and therefore its surface part is preferably conductive.

The material for it is, for example, preferably conductive metals and metal oxides, carbon materials and conductive polymers. The metals are, for example, platinum, gold, silver, ruthenium, copper, aluminium, nickel, cobalt, chromium, iron, molybdenum, titanium, tantalum and their alloys. Not specifically defined, the carbon material includes, for example, graphite, carbon black, glassy carbon, carbon nanotubes, fullerene. When a metal oxide such as FTO, ITO, indium oxide, zinc oxide, zinc oxide, antimony oxide is used, the quantity of light going into the sensitizing dye layer 4 may be increased since they are transparent or semi-transparent.

The electrolyte in the invention is poorly corrosive to metal, as compared with conventional iodine-type electrolytes; and therefore, when a metal substrate is used for the electrode substrate 7, the electrode substrate 7 is not almost corroded even through it is in contact with the electrolyte layer 5, and as a result, the long-term reliability of the device is improved more than before, and further the performance of a large-area device is favorably improved when a highly-conductive metal is used.

So far as at least the surface of the electrode substrate 7 is so processed as to be conductive, for example, an insulator such as glass or plastics may also be used with no problem. For making the insulator have conductivity, employable is a method of coating a part or all of the surface of the insulating material with the above-mentioned conductive material. For example, when a metal is used, employable is a solution method of plating or electroprecipitation, or a vapor-phase method of sputtering or vacuum evaporation; and when a metal oxide is used, employable is a sol-gel method. Also employable is a method of using one or more different types of powders of the above-mentioned conductive materials, and mixing them with an insulating material.

Even when an insulating material is used as the substrate 7 of the counter electrode 9, a catalyst layer 6 having high conductivity may be provided on the substrate 7, whereby the catalyst 6 may serve both as a collector and a catalyst by itself, and it may serve as the counter electrode 9.

The form of the electrode substrate 7 may be varied depending on the shape of the photoelectric conversion device 10 that is used as a catalyst electrode, and therefore it is not specifically defined. It may be tabular, or may be filmy and may be curved. Further, the electrode substrate 7 may be transparent or non-transparent; however, it is preferably transparent or semi-transparent since the quantity of light going into the sensitizing dye layer 4 may be increased, and as the case may be, since its design latitude may be broadened.

As the electrode substrate 7, generally used is FTO-coated glass, ITO-coated PET, ITO-coated PEN films. However, since its conductivity varies depending on the material used for it, the thickness of the conductive layer is not specifically limited. For example, in FTO-coated glass, the thickness of the layer may be from 0.01 $\mu$m to 5 $\mu$m, preferably from 0.1 $\mu$m to 1 $\mu$m.

The necessary conductivity varies, depending on the area of the electrode used; and a broader electrode is required to have a lower resistance. In general, the conductivity may be at most 100 $\Omega$/square, preferably at most 10 $\Omega$/square, more preferably at most 5 $\Omega$/square.

The thickness of the electrode substrate 7 varies, depending on the shape and the working condition of the photoelectric conversion device 10 as so mentioned hereinabove, and therefore it is not specifically limited. In general, it may be from 1 $\mu$m to 1 cm or so.

Not specifically defined, the catalyst layer 6 may be any one having electrode characteristics and capable of smoothly promoting the reduction reaction of reducing the oxidized form of the oxidation-reduction pair in the electrolyte into a reduced form. For it, usable are those coated with chloroplatinic acid and subjected to thermal treatment; platinum-deposited platinum catalyst electrodes; carbon materials such as active carbon, glassy carbon, carbon nanotubes; inorganic sulfur compounds such as cobalt sulfide; and conductive polymers such as polythiophene, polypyrrole, polyaniline. Among them, preferred are conductive polymer catalysts.

Preferred examples of the monomer to constitute the conductive polymer catalyst are thiophene compounds represented by the following general formula (2):

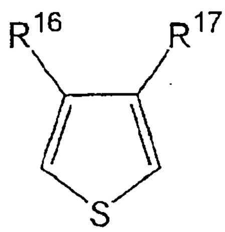

· · · (2)

(wherein $R^{16}$ and $R^{17}$ each independently represent a hydrogen atom, an alkyl or alkoxy group having from 1 to 8 carbon atoms, an aryl group having from 6 to 12 carbon atoms, a cyano group, a thiocyano group, a halogen atom, a nitro group, an amino group, a carboxyl group, a sulfo group, or a phosphonium group; and $R^{16}$ and $R^{17}$ may bond to

each other to form a ring).

Above all, preferred are thiophene, tetradecylthiophene, isothianaphthene, 3-phenylthiophene, 3,4-ethylenedioxythiophene and their derivatives; and more preferred are 3,4-ethylenedioxythiophene, hydroxymethyl-3,4-ethylenedioxythiophene, aminomethyl-3,4-ethylenedioxythiophene. One or more different types of thiophene compounds may be used to form the conductive polymer catalyst layer 6.

The monomer to be used in forming the conductive polymer catalyst layer 6 is preferably such that its polymerized film has a conductivity of at least $10^{-9}$ S/cm.

A dopant is preferably added to the conductive polymer catalyst layer 6 for the purpose of improving the conductivity of the layer. The dopant may be any known material.

Examples of the dopant are halogen anions such as iodide, bromide, chloride; halide anions such as hexafluorophosphorus, hexafluoroarsenic, hexafluoroantimony, tetrafluoroboron, perchlorate; alkyl group-substituted organic sulfonate anions such as methanesulfonate, dodecylsulfonate; cyclic sulfonate anions such as camphorsulfonate; alkyl group-substituted or unsubstituted benzene-mono- or di-sulfonate anions such as benzenesulfonate, paratoluenesulfonate, dodecylbenzenesulfonate, benzenedisulfonate; alkyl group-substituted or unsubstituted anions of naphthalenesulfonic acid substituted with from 1 to 3 sulfonic acid groups such as 2-naphthalenesulfonic acid, 1,7-naphthalenedisulfonic acid; alkyl group-substituted or unsubstituted biphenyl-sulfonate ions such as anthracene-sulfonate, anthraquinone-sulfonate, alkylbiphenyl-sulfonate, biphenyl-disulfonate ; polymer sulfonate anions such as polystyrenesulfonate, naphthalenesulfonate/formalin condensate; substituted or unsubstituted aromatic sulfonate anions; boron compound anions such as boron bis-salicylate, boron bis-catecholate; heteropoly acid anions such as molybdophosphate, tungustophosphate, tungstomolybdophosphate; imido acids. One or more such dopants may be used either singly or as combined.

For preventing the dopant from splitting off, an organic acid anion is preferred to an inorganic anion, and it is desirable that the dopant is hardly decomposed under heat. A low-molecular compound dopant is preferred to a polymer compound dopant, since the formed film may have a higher conductivity. Concretely, preferred examples of the dopant are paratoluenesulfonic acid, dodecylbenzenesulfonic acid, naphthalenesulfonic acid.

The amount of the dopant to be used in the conductive polymer catalyst layer is not specifically limited, as its optimum value varies depending on the type of the dopant used. Preferably, however, it is from 5 to 60 % by mass, more preferably from 10 to 45 % by mass.

The dopant may be kept mixed with the monomer for the conductive polymer, in forming the conductive polymer catalyst layer.

The conductive polymer catalyst layer 6 may be formed on the electrode substrate 7. The method for forming it is not specifically defined. For example, the layer may be formed from a solution of a melted or dissolved conductive polymer.

Preferably, the layer is porous and has a larger surface area, for which, therefore, employable is a method of chemical or electrochemical oxidative polymerization of a solution of a monomer for the conductive polymer with the solution kept in contact with the electrode substrate 7.

Also employable is a method that comprises processing a conductive polymer powder into a paste or emulsion or into a mixture containing the polymer solution and a binder, and then applying it onto the electrode substrate 7 through screen-printing, spraying or brush-coating.

For forming the conductive polymer catalyst layer 6 according to the above-mentioned methods, preferred is an electrolytic polymerization method or a chemical polymerization method; and more preferred is a chemical polymerization method. The chemical polymerization method is to oxidatively polymerize a polymerizing monomer, using an oxidizing agent. On the other hand, the electrolytic polymerization method is to form a conductive polymer on an electrode such as metal, through electrolytic oxidation of a polymerizing monomer in a solution containing it.

The oxidizing agent to be used in the chemical polymerization method includes halides such as iodine, bromine, iodobromine, chlorine dioxide, iodic acid, periodic acid, chlorous acid; metal halides such as antimony pentafluoride, phosphorus pentachloride, phosphorus pentafluoride, aluminium chloride, molybdenum chloride; high-valence metal salts such as permanganates, bichromates, chromic anhydride, ferric salts, cupric salts; protic acids such as sulfuric acid, nitric acid, trifluoromethanesulfuric acid; oxygen compounds such as sulfur trioxide, nitrogen dioxide; peroxo acids or their salts such as hydrogen peroxide; ammonium persulfate, sodium perborate; heteropolyacids or their salts such as molybdophosphoric acid, tungstophosphoric acid, tungstomolybdophosphoric acid. At least one of these may be used.

The above-mentioned chemical polymerization method is favorable for mass production, but when the oxidizing agent is reacted with an aromatic compound monomer in its solution, then the resulting polymer may be granular or massive, and it could hardly express a desired porosity and could be hardly shaped into electrodes. Accordingly, it is desirable that, after the electrode substrate 7 is dipped in a solution that contains any of an aromatic compound monomer and an oxidizing agent or after any one of the solutions is applied to the substrate, the substrate is dipped in the other solution or the other solution is applied to the substrate, whereby the monomer may be polymerized on the surface of the electrode substrate 7 to form a conductive polymer thereon.

Apart from the above, an additive having an ability to lower a polymerization speed may be added to the solution of a monomer and a polymerization initiator mixed therein, then the solution may be formed into a film under the condition under which the monomer is not polymerized at room temperature, and thereafter this may be heated and reacted to form a porous conductive polymer film. The method for film formation is not specifically defined. For example, employable is spin coating, casting, squeezing, screen-printing, etc.

The additive having an ability to lower a polymerization speed is described in a known reference, Synthetic Metals, 66, (1994) 263. According to it, when a polymerization initiator is a high-valence metal salt, for example, Fe(III) salt, then the oxidation potential of the Fe(III) salt varies depending on the ambient pH value, and therefore, the polymerization speed may be lowered by adding a base to the system. Examples of the base are imidazole and dimethylsulfoxide.

Not specifically defined, the solvent for dissolving and mixing the above-mentioned monomer and the polymerization initiator and the additive may be any one capable of dissolving the compounds not dissolving the electrode substrate 7 and the formed polymer. For example, it includes alcohols such as methanol, ethanol, propanol, normal butanol.

The blend ratio of the above-mentioned monomer, the polymerization initiator and the additive may vary depending on the compounds used, the intended degree of polymerization and the polymerization speed. Preferably, it falls between 1/0.3 and 1/10 as a molar ratio of monomer/polymerization initiator, or falls between 1/0.05 and 1/4 as a molar ratio of polymerization initiator/additive.

The heating condition in the process where the above-mentioned mixture solution is applied to the substrate and then thermally polymerized may vary, depending on the monomer, the polymerization catalyst and the additive used, and their blend ratio, concentration, and the coating film thickness. One preferred condition when the coated substrate is heated in air is such that the heating temperature is from 25°C to 120°C and the heating time is from 1 minute to 12 hours.

Further, also employable is a method where a dispersion or paste of conductive polymer particles prepared separately is used to form a conductive polymer film on the surface of the electrode substrate 7 or on the surface of a conductive film-coated electrode substrate, and then this is subjected to the above-mentioned chemical polymerization so as to grow the conductive polymer particles.

The thickness of the catalyst layer 6 in the counter electrode 9 is suitably from 5 nm to 5 μm, more preferably from 50 nm to 2 μm.

After the above-mentioned constituent materials are prepared, the metal oxide semiconductor electrode and the catalyst electrode are assembled in a conventional known method in such a manner that they may face each other via the electrolyte therebetween, thereby completing the photoelectric conversion device 10.

[Examples]

The invention is described in more detail with reference to the following Examples, to which, however, the invention should not be limited.

<Example 1>

[Formation of Porous Metal Oxide Semiconductor]

A transparent conductive film of fluorine-doped $SnO_2$ was formed on a transparent substrate 1 of glass, through vacuum evaporation to from a transparent conductive film 2, on which was formed a porous metal oxide semiconductor layer 3 according to the following method:

As the electrode substrate 8 with the transparent conductive film 2 formed on the transparent substrate 1, used was FTO glass (by Nippon Sheet Glass). To its surface, applied was a commercially-available titanium oxide paste (by Shokubai Kasei, trade name TSP-18NR, having a particle size of 20 nm) according to a screen-printing method to form a film having a thickness of 6 μm or so and an area size of 5 mm x 10 mm or so, on the side of the transparent conductive film 2; and further on it, a commercially-available titanium oxide paste (by Shokubai Kasei, trade name TSP-400C, having a particle size of 400 nm) was applied according to a screen-printing method to thereby form a film having a thickness of 4 μm or so and having the same area size as above; and then this was fired in air at 500°C for 30 minutes. As a result, obtained was a titanium oxide film having a thickness of 10 μm or so (porous metal oxide semiconductor layer 3).

[Adsorption of Sensitizing Dye]

As the sensitizing dye 4, used was bis(4-carboxy-4'-tetrabutylammoniumcarboxy-2,2'-bipyridine)diisothiocyanate/ruthenium complex generally referred to as N719 dye (by Solaronix). The above-mentioned, porous titanium oxide

semiconductor electrode was dipped in a water-free ethanol solution of the dye having a dye concentration of 0.4 mmol/L, and kept shielded overnight from light. Next, this was washed with water-free ethanol to remove the excessive dye, and then dried in air to form a semiconductor electrode for solar cells.

[Preparation of Electrolytic Solution]

Next, an electrolytic solution to constitute the electrolyte layer 5 was prepared. As the solvent, used was 3-methoxypropionitrile; and 0.05 mol/L of bis(5-methyl-1,3,4-thiadiazolyl)-2-disulfide and 0.6 mol/L of 5-methyl-2-mercapto-1,3,4-thiadiazole/tetrabutylammonium salt were dissolved therein to prepare an electrolytic solution. The above-mentioned compounds were commercial products, or were produced from commercial products according to a known method or according to Production Examples mentioned hereinunder.

[Formation of Counter Electrode]

As the counter electrode 9, used was poly(3,4-ethylenedioxythiophene) (hereinafter referred to as PEDOT) counter electrode. As the electrode substrate 7, used was FTO film-coated glass (by Asahi Glass, about 10 Ω/square). The electrode substrate 7 was ultrasonically washed in an organic solvent, and a reaction solution prepared by dissolving 3,4-ethylenedioxythiophene, iron(III) tris-p-toluenesulfonate and dimethylsulfoxide in a ratio by weight of 1/8/1 in n-butanol was applied by a spin-coating method. The revolution condition in spin coating is 2000 rpm for 30 seconds. The 3,4-ethylenedioxythiophene concentration in the solution was 0.48 M. Next, the solution-coated electrode substrate was put into a thermostat kept at 110°C, and heated for 5 minutes for polymerization, and then washed with methanol to form the counter electrode 9. Thus formed, the thickness of the thin PEDOT film was about 0.3 μm.

[Construction of Solar Cell]

Using an electric drill, two holes having a diameter of 1 mmϕ for electrolytic solution injection were formed in the counter electrode 9 produced in the manner as above; and then the counter electrode 9 was stuck to the electrode substrate 8 (working electrode), comprising the transparent substrate 1 with the transparent conductive film 2 and the titanium oxide film 3 formed thereon in the manner as above, in such a manner that a thermoplastic sheet (Himilan 1652, by Mitsui-DuPont Polychemical, having a thickness of 30 μm) was put sandwiched between the two electrodes, and the two electrodes were adhered together under heat and pressure. Next, the electrolytic solution prepared in the manner as above was infiltrated into between the two electrodes through the electrolytic solution injection holes according to a capillary phenomenon; and then a glass sheet having a thickness of 1 mm was put on the electrolytic solution injection holes, thereafter a UV sealant (Three Bond's trial product, 31X-101) was applied to it, and this was irradiated with UV rays at an intensity of 100 $mW/cm^2$ for 30 seconds and sealed up to construct a solar cell.

<Example 2>

A solar cell was produced in the same manner as in Example 1, for which, however, 1-methyl-3-ethylimidazolium bis(trifluoromethanesulfonyl)imide was used as the solvent for the electrolyte layer 5.

<Comparative Example 1>

A solar cell was produced in the same manner as in Example 1, for which, however, 3-methoxypropionitrile was used as the solvent for the electrolyte layer 5, and 0.05 mol/L of iodine and 0.6 mol/L of 1-methyl-3-propylimidazolium iodide were dissolved therein.

<Comparative Example 2>

A solar cell was produced in the same manner as in Example 1, for which, however, 1-methyl-3-ethylimidazolium bis(trifluoromethanesulfonyl)imide was used as the solvent for the electrolyte layer 5, and 0.05 mol/L of iodine and 0.6 mol/L of 1-methyl-3-propylimidazolium iodide were dissolved therein.

<Conparative Example 3>

A solar cell was produced in the same manner as in Comparative Example 1, for which, however, a Pt counter electrode (by Geomatec) produced by depositing Pt on ITO conductive glass through sputtering was used as the counter electrode 9.

<Comparative Example 4>

A solar cell was produced in the same manner as in Example 1, for which, however, a Pt counter electrode (by Geomatec) produced by depositing Pt on ITO conductive glass through sputtering was used as the counter electrode 9.

[Evaluation of Photoelectric Conversion Efficiency and Durability of Solar Cell]

The produced solar cells were evaluated according to the methods mentioned below. For the performance evaluation, used as an AM filter-fitted xenon lamp solar simulator, XES-502S (by Kansai Scientific Machinery). After spectral modulation at AM 1.5 G, the cell was irradiated with it under the condition of 100 $mW/cm^2$, and its load characteristic (I-V characteristic) was evaluated with a potentiostat. The evaluation factors of solar cell are an open-circuit voltage Voc (V), a short-circuit current density Jsc ($mA/cm^2$), a form factor FF (-), a conversion efficiency $\eta$ (%). For their general evaluation, the solar cells were evaluated in point of the goodness or the badness of their performance, based on the level of the conversion efficiency $\eta$ thereof. The results are shown in Table 1.

Table 1

| | Voc [V] | Jsc [$mA/cm^2$] | FF | $\eta$ [%] |
|---|---|---|---|---|
| Example 1 | 0.637 | 10.15 | 0.677 | 4.38 |
| Example 2 | 0.557 | 3.74 | 0.666 | 1.39 |
| Comparative Example 1 | 0.694 | 11.68 | 0.679 | 5.50 |
| Comparative Example 2 | 0.574 | 4.65 | 0.652 | 1.74 |
| Comparative Example 3 | 0.692 | 11.50 | 0.682 | 5.43 |
| Comparative Example 4 | 0.634 | 10.08 | 0.542 | 3.46 |

As known from Table 1, the devices comprising the oxidation-reduction pair of the invention either in an organic solvent system or an ionic liquid system exhibit an photoelectric conversion efficiency on the level comparable to that of the devices comprising a conventional iodine-type oxidation-reduction pair, under pseudo-sunlight irradiation condition. The performance of the devices comprising the cobalt complex oxidation-reduction pair shown in the above-mentioned Non-Patent Documents 1 to 3 is nearly a half of the iodine-type devices under pseudo-sunlight irradiation condition; and the oxidation-reduction pair of the invention is more excellent than the cobalt complex oxidation-reduction pair. Further, the above-mentioned cobalt complex readily undergoes reversed electron transfer that receives electrons from the surface of the working electrode substrate of FTO conductive glass, and therefore, it requires a tight semiconductor layer of titanium oxide or the like between the FTO conductive glass and the porous semiconductor layer for the purpose of preventing the contact of the electrolyte layer with the conductive glass surface; however, the oxidation-reduction pair of the invention has low reactivity on FTO conductive glass, and therefore does not require such a tight layer to exhibit the above-mentioned high-level device performance, and the practicability of the device of the invention is high.

Further, in Example 1 in which PEDOT electrode was used as the counter electrode, the device performance was higher than in Comparative Example 4 where Pt electrode was used as Lhe counter electrode; and in particular, the device in the former has an especially excellent FF value. This is because the catalyst activity of PEDOT to the oxidation-reduction pair in the invention is higher than that of Pt; and this may be confirmed from the interfacial reaction resistance analysis through impedance measurement. Accordingly, when the oxidation-reduction pair in the invention is combined with a conductive polymer catalyst such as PEDOT, then a photoelectric conversion device having a high photoelectric conversion efficiency may be produced. In addition, the produced devices were stable for 2 months at room temperature in an open circuit condition.

[Evaluation of Transmittance]

A solution of 5 mmol/L of bis(5-methyl-1,3,4-thiadiazolyl)-2-disulfide and 60 mmol/L of 5-methyl-2-mercapto-1,3,4-thiadiazole/tetrabutylammonium salt dissolved in 3-methoxypropionitrile (Example 3), and a solution of 5 mmol/L of iodine and 60 mmol/L of 1-methyl-3-propylimidazolium iodide dissolved in 3-methoxypropionitrile (Comparative Example 5) were produced, and compared through measurement of the absorption spectrum thereof with a UV-visible range spectrophotometer (UV-2100, by Shimadzu). The results are shown in Fig. 2.

From Fig. 2, it is known that the electrolyte in the invention has a narrower visible light absorption range as compared with a conventional iodine-type electrolyte. In addition, the absorption coefficient of the former is smaller than

that of iodine, and therefore, when the electrolyte is incorporated into a solar cell, then it is not almost colored even at its practical concentration (0.5 to 2 mol/L) and it may be used as a transparent electrolyte layer.

[Evaluation of Corrosion Resistance]

A silver paste (Kyoto Elex's trade name, DD-1050) was applied onto the surface of a commercially-available glass substrate according to a screen-printing method, thereby forming a film thereon having a thickness of about 10 μm and a width of 1 mm, and then heated at 500°C for 30 minutes, thereby forming a silver wire line on the glass substrate. The electrolytic solution and the iodine-type electrolytic solution used in Example 2 and Comparative Example 2, respectively, were separately applied onto a part of the silver wires, and the kept at 25°C for 8 hours. Next, the electrolytic solutions were wiped away, and the two were compared with each other in point of the resulting outward appearance of the silver wires and the resistance between the silver wires. As a result, the iodine-type electrolytic solution used in Comparative Example 2 corroded the silver wires and increased the resistance of the wires; but there was seen no change in the outward appearance and the resistance of the silver wires to which the electrolytic solution of the invention used in Example 2 had been applied.

As in the above, the oxidation-reduction pair of the invention is excellent over the conventional iodine-type oxidation-reduction pair in point of the device performance, the corrosion resistance and the transparency; and when the oxidation-reduction pair of the invention is used as combined with an organic conductive polymer counter electrode, then a photoelectric conversion that is highly practicable and is excellent in the performance, the durability, the cost reduction and the design latitude can be provided.

<Production Examples of the Invention>

Production Examples of the oxidation-reduction pair of the invention are shown below, to which, however, the production method of the invention is not limited. The oxidation-reduction pair of the invention may be produced using any known materials according to any production methods.

[Production of Oxidation-Reduction Pair: reduced form]

One molar equivalent of 5-methyl-2-mercapto-1,3,4-thiadiazole and 0.5 molar equivalents of potassium carbonate were dissolved in methanol, and with stirring, this was processed in an ultrasonic bath until potassium carbonate was dissolved and disappeared (for about 2.5 hours). Next, the solid matter was removed by filtering the liquid through filter paper, and the solvent was evaporated away with a rotary evaporator. Then, the resulting white solid was washed with dichloromethane, and dried in vacuum to produce 5-methyl-2-mercapto-1,3,4-thiadiazole potassium salt. The reaction yield was 70 %.

Next, the produced compound was dissolved in 1 molar equivalent of acetone (concentration: 1M), and the resulting solution was mixed with a solution prepared by dissolving 1 molar equivalent of tetrabutylammonium perchlorate in acetone (concentration: 1 M), and processed in an ultrasonic bath for about 1 hour, and thereafter this was kept stored overnight in a freezer. Next, the solid matter was removed from it through filtration, and the solvent was evaporated away. The resulting white solid was dried in vacuum for 12 hours, thereby producing a reduced form compound of an oxidation-reduction pair, 5-methyl-2-mercapto-1,3,4-thiadiazole/tetrabutylammonium salt. Its reaction yield was 95 %.

[Production of Oxidation-Reduction Pair: oxidized form]

One molar equivalent of 5-methyl-2-mercapto-1,3,4-thiadiazole potassium salt produced according to the method mentioned above was dissolved in water, and then 0.5 molar equivalent of iodine was added thereto, and the solution was kept stirred until iodine was dissolved. Next, the formed white precipitate was collected through filtration, washed with water, and then dried in vacuum for 24 hours, thereby producing an oxidized form compound of an oxidation-reduction pair, bis(5-methyl-1,3,4-thiadiazolyl)-2-disulfide. Its reaction yield was 30 %. The materials used in the above Production Examples were commercial products.

ADVANTAGES OF THE INVENTION

When the oxidation-reduction pair of the invention is used in a photoelectric conversion device such as a dye-sensitized solar cell device, then the resulting device may have photoelectric conversion efficiency and stability comparable to those of the device where a conventional iodine-type oxidation-reduction pair is used; and in addition, the device of the invention may solve the problems of corrosion resistance and transparency that are the weak points of conventional iodine-type devices. Concretely, the electrolytic solution used in the invention does not corrode metal, and therefore a

metal sheet can be sued as the substrate, or that is, the material latitude in the invention is broadened. Further, the oxidation-reduction pair in the invention does not have a strong absorption in a visible light region, and therefore the latitude in designing the device using it is broadened. Moreover, in case where a high-concentration electrolytic solution is used in the device of the invention, the electrolyte layer does not absorb visible light to interfere with the light absorption by the dye therein, and therefore, the invention provides a photoelectric conversion device of high practicability.

INDUSTRIAL APPLICABILITY

The photoelectric conversion device of the invention is favorably used as photoelectric conversion devices for outdoor use. Taking advantage of the characteristics of the electrolyte used therein, the invention is applicable to various industrial appliances that require a broad latitude in designing them. Further, not only to photoelectric conversion devices, the invention is applicable but also to optical sensors, etc.

## Claims

1. A photoelectric conversion device comprising a semiconductor electrode, a counter electrode and an electrolyte layer held between the two electrodes, in which the electrolyte layer contains a compound of the following general formula (1) as an oxidation-reduction pair therein:

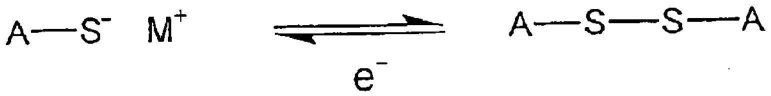


· · · (1)

(wherein $M^+$ represents an organic or inorganic cation; A represents an aromatic, non-aromatic, heteroaromatic or hetero-non-aromatic cyclic compound).

2. The photoelectric conversion device as claimed in claim 1, wherein the cyclic compound is at least one selected from thiadiazole compounds, pyridine compounds and phenylene conpounds.

3. The photoelectric conversion device as claimed in claim 1 or 2, wherein the counter electrode contains a conductive polymer catalyst that has a catalytic activity for the oxidation-reduction pair.

4. The photoelectric conversion device as claimed in claim 3, wherein the conductive polymer catalyst is composed of a polymer of 3,4-ethylenedioxythiophene or its derivative.

Fig. 1

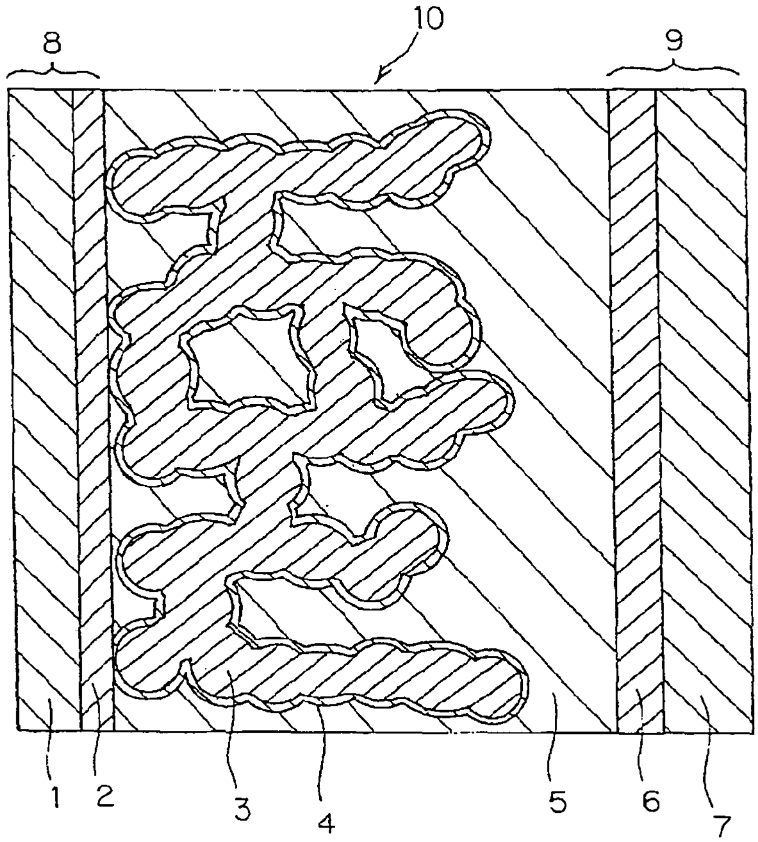
10
8
9
1
2
3
4
5
6
7

Fig. 2

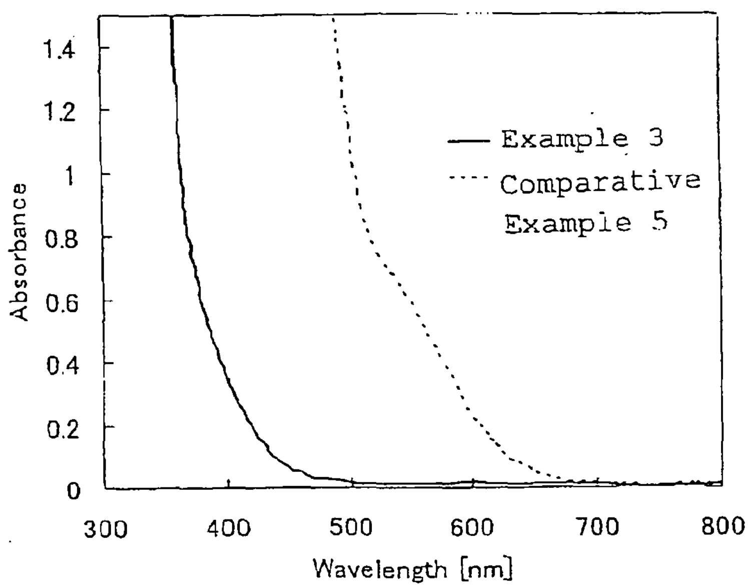
Absorbance
1.4
1.2
1
0.8
0.6
0.4
0.2
0
300
400
500
600
700
800
Wavelength [nm]
Example 3
Comparative Example 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9507334 T
- JP 8259543 A


### Non-patent literature cited in the description


- **GRAETZEL et al.** Lausanne University in Switzerland. *Nature,* 1991, vol. 353, 737-740
- *J. Phys. Chem. B,* 2001, vol. 105, 10461-10464
- *Chem. Eur. J.,* 2003, vol. 9, 3756-3763
- *J. Am. Chem. Soc.,* 2002, vol. 124, 11215-11222
- *J. Phys. Chem. B,* 2001, vol. 105, 6867-6873
- *J. Am. Chem. Soc.,* 2004, vol. 126, 7164-7165
- *Inorg. Chem,* 1996, vol. 35, 1168-1178
- *Electrochemistry,* 2002, vol. 2, 130-136
- *Synthetic Metals,* 1994, vol. 66, 263